# EUROPEAN PATENT APPLICATION

(11) **EP 2 527 188 A2**
(43) Date of publication of application: **28.11.2012**
(21) Application number: 12169092.9
(22) Date of filing: 23.05.2012
(51) Int. Cl.: B60L 11/18

(54) **Apparatus and methods for generating energy prices**

(30) Priority: 27.05.2011 US 201113117344
(71) Applicant: General Electric Company, Schenectady, NY 12345 (US)
(72) Inventor: Lafrance, Ryan Marc, Atlanta, GA 30339 (US)
(74) Representative: Picker, Madeline Margaret

(57) **Abstract**

A computing device (138) for use with a charging station (100) is provided. The computing device includes an interface that is configured to receive demand response data for the charging station. Moreover, the computing device includes a processor (214) that is coupled to the interface and that is programmed to generate a plurality of energy prices based on the demand response data, wherein each energy price is associated with a time range. The computing device also includes a presentation interface (207) that is coupled to the processor for use in presenting the plurality of energy prices to a user of the charging station.

## Description

### BACKGROUND OF THE INVENTION

The present disclosure relates generally to electric vehicle charging stations and, more particularly, to a computing device that is configured to enable an electric vehicle charging station to generate energy prices based on demand response data.

At least partially in response to increasing fuel costs related to the use of conventional combustion engine vehicles, the use of electric vehicles has increased. Accordingly, energy demand has increased in the form of electrical energy used to charge batteries or other energy sources used in such vehicles. Moreover, with an increase in the number of electric vehicles being used by consumers, the need for electric vehicle charging stations (EVCS) has increased throughout the world in order to provide energy to the electric vehicles. In addition, the demand on the power grid is likely to increase while the demand for fuel decreases. Such demands will likely cause an increase in the price of energy from the power grid. In particular, the price of energy is likely to increase during peak times of high demand. Moreover, the increased demand on the power grid may provide market demand for charging stations at conventional fueling stations, roadside rest areas, restaurants, parking garages, and other common parking areas.

Currently, at least some known utility companies use demand response (DR) to manage the consumption patterns and/or behavior of energy consumption by their customers in response to supply conditions. For example, some known utility companies may have customers reduce their consumption at critical times or in response to market prices. To reduce peak loads, at least some known utility companies may use smart grid applications that provide time-based pricing that enables customers to selectively adjust their usage to take advantage of fluctuating prices.

At least some known EVCSs, in addition to providing electrical energy to electric vehicles, may provide other functions related to demand response. For example, each EVCS may provide revenue grade metering, communications to an advanced metering infrastructure (AMI), smart grid functionality to a utility, and billing systems to a third party. However, at least some known EVCSs are not enabled to directly generate energy prices based on demand response data for a particular EVCS .

### BRIEF DESCRIPTION OF THE INVENTION

In one embodiment, a computing device for use with a charging station is provided. The computing device includes an interface that is configured to receive demand response data for the charging station. Moreover, the computing device includes a processor that is coupled to the interface and that is programmed to generate a plurality of energy prices based on the demand response data, wherein each energy price is associated with a time range. The computing device also includes a presentation interface that is coupled to the processor for use in presenting the plurality of energy prices to a user of the charging station.

In another embodiment, a charging station is provided. The charging station includes at least one monitoring device configured to generate demand response data. The charging station also includes a computing device that is coupled to the monitoring device. The computing device includes an interface that is configured to receive the demand response data. Moreover, the computing device includes a processor that is coupled to the interface and that is programmed to generate a plurality of energy prices based on the demand response data, wherein each energy price is associated with a time range. The computing device also includes a presentation interface that is coupled to the processor for use in presenting the plurality of energy prices to a user of the charging station.

In yet another embodiment, a method for generating energy prices is provided. The method includes receiving demand response data for a charging station. Moreover, a plurality of energy prices based on the demand response data is generated, wherein each energy price is associated with a time range. The method also includes presenting the plurality of energy prices to a user of the charging station.

### BRIEF DESCRIPTION OF THE DRAWINGS

Fig. 1. is a block diagram of an example electric vehicle charging station;
Fig. 2 is a block diagram of an example computing device that may be used with the electric vehicle charging station shown in Fig. 1; and
Fig. 3 is a flow chart of an example method for use in generating energy prices using the computing device shown in Fig. 2.

### DETAILED DESCRIPTION OF EMBODIMENTS OF THE INVENTION

The example apparatus, systems, and methods described herein overcome at least some known disadvantages of known electric vehicle charging stations by enabling the charging station to generate energy prices based on demand response data for the charging station. More specifically, the embodiments described herein include a computing device for use with an electric vehicle charging station. The computing device includes an interface that is configured to receive demand response data for the charging station. Moreover, the computing device includes a processor that is coupled to the interface and that is programmed to generate a plurality of energy prices based on the demand response data, wherein each energy price is associated with a time range. The computing device also includes a presentation interface that is coupled to the processor for use in presenting the plurality of energy prices to the user of the charging station. Accordingly, the computing device enables the charging station to generate energy prices that are based on the demand response data that is unique to the charging station. As such, the charging station may determine prices that may be used by a utility to manage the consumption patterns and/or the behavior of energy consumption by their customers in response to supply conditions. Moreover, by providing such energy prices to the user, the user is enabled to identify the optimal period of time to charge his or her electric vehicle at the charging station in order to receive the cheapest price rates.

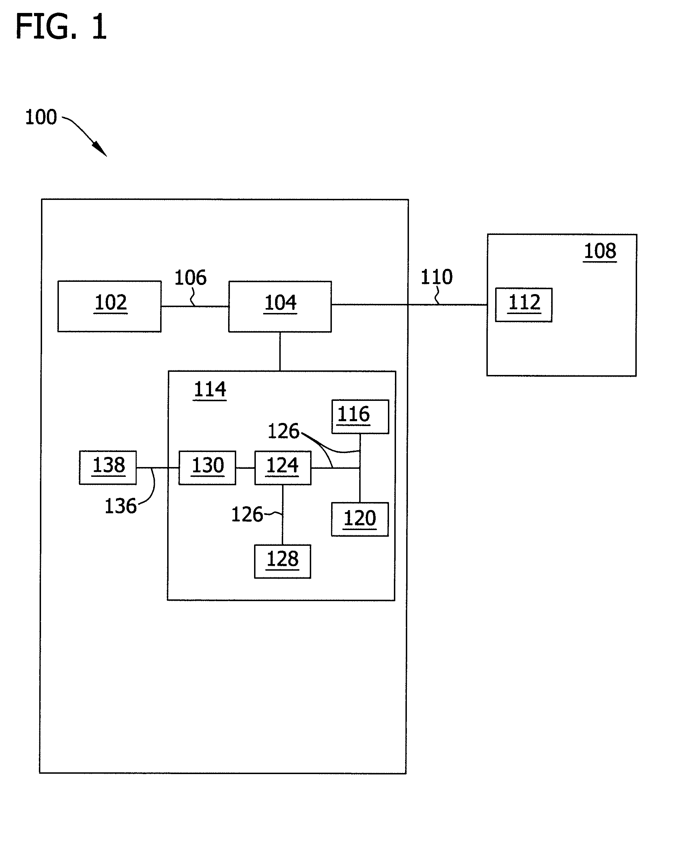

Fig. 1 illustrates an electric vehicle charging station 100. In the example embodiment, electric vehicle charging station 100 includes an energy source 102 and an energy delivery device 104 coupled to energy source 102 via a conduit 106. It should be noted that, as used herein, the term "couple" is not limited to a direct mechanical, electrical, and/or communication connection between components, but may also include an indirect mechanical, electrical, and/or communication connection between multiple components. Moreover, in the example embodiment, conduit 106 is fabricated from a metallic wire. Alternatively, conduit 106 may be fabricated from any other substance or compound that enables conduit 106 to deliver electrical energy from energy source 102 to energy delivery device 104 and that enables charging station 100 to function as described herein.

In the example embodiment, at least one electric vehicle 108 is coupled to charging station 100. More specifically, energy delivery device 104 is coupled to electric vehicle 108 via a conduit 110. Alternatively, electric vehicle 108 may be wirelessly coupled to energy delivery device 104. It should also be noted that the term "electric vehicle" refers generally to a vehicle that includes one or more electric motors (not shown) that are used to provide propulsion to the vehicle. Energy, such as electrical energy, used to generate power and propel electric vehicles may come from various sources, such as, but not limited to, an on-board rechargeable battery and/or an on-board fuel cell. In one embodiment, the electric vehicle is a hybrid electric vehicle, which captures and stores energy generated by braking. Moreover, a hybrid electric vehicle uses energy stored in an electrical source, such as a battery, to continue operating when idling to conserve fuel. Some hybrid electric vehicles are capable of recharging the battery by plugging into a power receptacle, such as a general power outlet. Another example of an electric vehicle is a fuel-cell vehicle, which uses only electrical energy for propulsion. Accordingly, the term "electric vehicle" as used herein may refer to a hybrid electric vehicle, a fuel-cell vehicle, or any other vehicle to which electrical energy may be delivered via a power grid.

More specifically, in the example embodiment, a battery 112 within electric vehicle 108 is coupled to energy delivery device 104 via conduit 110. In the example embodiment, battery 112 is a rechargeable lithium-ion battery 112. Alternatively, battery 112 may be any other lithium-based battery or any other type of battery that enables electric vehicle 108 to function as described herein. In the example embodiment, energy delivery device 104 selectively supplies energy, such as electrical energy, from energy source 102 to battery 112. Electric vehicle 108 is configured to store the electrical energy in battery 112 and to use the stored electrical energy for propulsion, rather than, or in addition to, more conventional energy sources, such as gasoline. Moreover, in the example embodiment, conduit 110 is fabricated from a metallic wire. Alternatively, conduit 110 may be fabricated from any other substance or compound that enables conduit 110 to deliver electrical energy to electric vehicle 108 and that enables charging station 100 to function as described herein.

In the example embodiment, charging station 100 also includes at least one monitoring device 114 that is coupled to energy delivery device 104 and that is configured to monitor the usage of charging station 100. More specifically, monitoring device 114 monitors a number of electric vehicles 108 that are coupled to charging station 100 during a period of time and a consumption of electrical energy by electric vehicles 108 during the period of time. Monitoring device 114 also monitors the consumption of electrical energy by any user of charging station 100 during a period of time. As used herein, a period time includes a period of minutes, a period of hours, a period of days, a period of months and/or a particular season. Alternatively, a period of time may include any other period of time that enables charging station 100 to function as described herein.

In the example embodiment, monitoring device 114 includes a meter 116 that is configured to monitor the consumption of electricity by the users of charging station 100. More specifically, in the example embodiment, meter 116 is an electricity meter, such as a utility grade meter. Moreover, monitoring device 114 includes at least one sensor 120 that is configured to detect the number of electric vehicles 108 that are coupled to charging station 100.

In the example embodiment, monitoring device 114 includes a processor 124 that is coupled to meter 116 and to sensor 120 via a system bus 126. In the example embodiment, processor 124 is programmed by encoding an operation using one or more executable instructions and providing the executable instructions in a memory device 128 that is also coupled to processor 124 via system bus 126. The term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above represent examples only, and thus are not intended to limit in any way the definition and/or meaning of the term "processor."

In the example embodiment, processor 124 is programmed to generate demand response data based on the information received from meter 116 and sensor 120. More specifically, processor 124 is programmed to organize the information received from meter and sensor 120. Moreover, in the example embodiment, the demand response data may include the number of electric vehicles 108 that are coupled to charging station 100 during a period of time and/or the consumption of electrical energy by electric vehicles 108 during the period of time. The demand response data may also include the consumption of electrical energy by any user of charging station 100 during a period of time. Alternatively, the demand response data may include all of the aforementioned data or some of the aforementioned data, or the demand response data may include any additional data that enables monitoring device 114 and/or charging station 100 to function as described herein.

Memory device 128, in the example embodiment, includes one or more devices that enable information, such as executable instructions and/or other data, to be stored and retrieved. Moreover, in the example embodiment, memory device 128 includes one or more computer readable media, such as, without limitation, dynamic random access memory (DRAM), static random access memory (SRAM), a solid state disk, and/or a hard disk. In the example embodiment, memory device 128 stores, without limitation, application source code, application object code, configuration data, additional input events, application states, assertion statements, validation results, and/or any other type of data. More specifically, in the example embodiment, memory device 128 stores the demand response data.

In the example embodiment, monitoring device 114 also includes a network interface 130 that is coupled to processor 124 via system bus 126 and that is coupled to a network 136. In the example embodiment, network 136 may include, but is not limited to only including, the Internet, a local area network (LAN), a wide area network (WAN), a wireless LAN (WLAN), a mesh network, and/or a virtual private network (VPN).

Charging station 100, in the example embodiment, also includes a computing device 138 that is coupled to monitoring device 114 via network 136. While, in the example embodiment, computing device 138 is positioned within charging station 100, it should be noted that computing device 138 is not limited to being positioned within charging station 100 and may, for example, be positioned adjacent to charging station 100.

In the example embodiment, monitoring device 114 may communicate with computing device 138 using a wired network connection (e.g., Ethernet or an optical fiber), a wireless communication means, such as radio frequency (RF), e.g., FM radio and/or digital audio broadcasting, an Institute of Electrical and Electronics Engineers (IEEE®) 802.11 standard (e.g., 802.11(g) or 802.11(n)), the Worldwide Interoperability for Microwave Access (WIMAX®) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of the Institute of Electrical and Electronics Engineers, Inc., of New York, New York. In the example embodiment, computing device 138 is configured to receive information from monitoring device 114. More specifically, in the example embodiment, computing device 138 is configured to receive the demand response data from monitoring device 114.

During operation, each time electric vehicles 108 are coupled to charging station 100 and consume energy from charging station 100, monitoring device 114 monitors such usage. More specifically, sensor 120 detects the number of electric vehicles 108 coupled to charging station 100. Meter 116 measures the consumption of electrical energy by each electric vehicle 108 and monitors the various periods of time the consumption of electrical energy occurs. Moreover, meter 116 measures the consumption of electrical energy by any user of charging station 100 and monitors the various periods of time the consumption occurs. Meter 116 and sensor 120 each transmits the information to processor 124. Processor 124 then organizes the information generates demand response data based on the information received from meter 116 and sensor 120. The demand response data is stored in memory device 128.

When a charge on battery 112 of electric vehicle 108 is below a desired charge level, the user takes electric vehicle 108 to charging station 100. Computing device 138 prompts the user as to whether the user would like to receive demand response information for charging station 100. The user inputs a confirmation to receive the demand response information. Computing device 138 receives the demand response data from monitoring device 114. Computing device 138 then generates a plurality of energy prices based on the demand response data, wherein each energy price is associated with a time range. Computing device 138 then provides the demand response information to the user. More specifically, in the example embodiment, computing device 138 provides the plurality of energy prices to the user.

Accordingly, computing device 138 enables charging station 100 to generate energy prices that are based on the demand response data that is unique to charging station 100. As such, charging station 100 determine prices that may be used by a utility (not shown) to manage the consumption patterns and/or the behavior of energy consumption by their customers in response to supply conditions. Moreover, by providing the demand response information, computing device 138 enables the user to identify when to use charging station 100. More specifically, based on the pricing information received, the user can identify the optimal period of time to charge electric vehicle 108 at charging station 100 in order to receive the cheapest price rates.

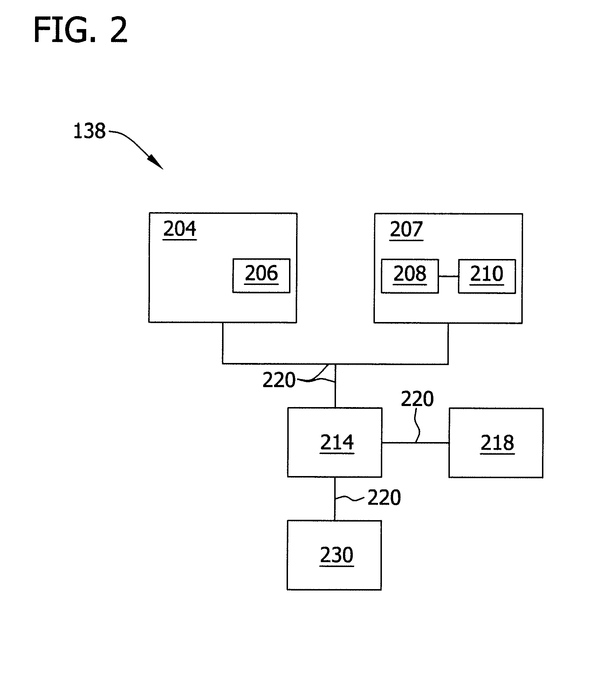

Fig. 2 is a block diagram of computing device 138 that is positioned within charging station 100 (shown in Fig. 1). Computing device 138 includes a user interface 204 that receives at least one input from a user. In the example embodiment, user interface 204 includes a keyboard 206 that enables a user to input pertinent information. Alternatively, user interface 204 may include, for example, a pointing device, a mouse, a stylus, a touch sensitive panel (e.g., a touch pad or a touch screen), a gyroscope, an accelerometer, a position detector, and/or an audio input interface (e.g., including a microphone).

Moreover, in the example embodiment, computing device 138 includes a presentation interface 207 that presents information, such as input events and/or validation results, to the user. In the example embodiment, presentation interface 207 includes a display adapter 208 that is coupled to at least one display device 210. More specifically, in the example embodiment, display device 210 is a visual display device, such as a cathode ray tube (CRT), a liquid crystal display (LCD), an organic LED (OLED) display, and/or an "electronic ink" display. Alternatively, presentation interface 207 may include an audio output device (e.g., an audio adapter and/or a speaker) and/or a printer.

Computing device 138 also includes a processor 214 and a memory device 218. In the example embodiment, processor 214 is coupled to user interface 204, presentation interface 207, and to memory device 218 via a system bus 220. In the example embodiment, processor 214 communicates with the user, such as by prompting the user via presentation interface 207 and/or by receiving user inputs via user interface 204. Moreover, in the example embodiment, processor 214 is programmed by encoding an operation using one or more executable instructions and providing the executable instructions in memory device 218. More specifically, processor 214 is programmed to generate a plurality of energy prices by calculating a plurality of recharging costs based on the demand response data received from monitoring device 114 (shown in Fig. 1), wherein each energy price is associated with a time range.

The term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above represent examples only, and thus are not intended to limit in any way the definition and/or meaning of the term "processor."

In the example embodiment, memory device 218 includes one or more devices that enable information, such as executable instructions and/or other data, to be stored and retrieved. Moreover, in the example embodiment, memory device 218 includes one or more computer readable media, such as, without limitation, dynamic random access memory (DRAM), static random access memory (SRAM), a solid state disk, and/or a hard disk. In the example embodiment, memory device 218 stores, without limitation, application source code, application object code, configuration data, additional input events, application states, assertion statements, validation results, and/or any other type of data. More specifically, in the example embodiment, memory device 218 stores input data received by the user via user interface 204 and/or information received from other components of charging station 100, such as monitoring device 114.

Computing device 138, in the example embodiment, also includes a communication interface 230 that is coupled to processor 214 via system bus 220. Moreover, in the example embodiment, communication interface 230 is communicatively coupled to monitoring device 114 via network 136 (shown in Fig. 1). In the example embodiment, communication interface 230 communicates with monitoring device 114 and/or other components of charging station 100.

During operation, each time electric vehicles 108 (shown in Fig.1) are coupled to charging station 100 and consume energy from charging station 100, monitoring device 114 monitors such usage. More specifically, sensor 120 (shown in Fig. 1) detects the number of electric vehicles 108 coupled to charging station 100. Meter 116 (shown in Fig. 1) measures the consumption of electrical energy by each electric vehicle 108, and monitors the various periods of time the consumption of electrical energy occurs. Moreover, meter 116 measure the consumption of electrical energy by any user of charging station 100 and monitors the various periods of time the consumption occurs. Meter 116 and sensor 120 each transmits the information to processor 124 (shown in Fig. 1). Processor 124 then generates demand response data based on the information received from meter 116 and sensor 120. The demand response data is stored in memory device 128 (shown in Fig. 1).

When a charge on battery 112 of electric vehicle 108 is below a desired charge level, the user takes electric vehicle 108 to charging station 100. Computing device 138, via presentation interface 207, prompts the user as to whether the user would like to receive demand response information for charging station 100. The user inputs, via user interface 204, a confirmation to receive the demand response information.

Computing device 138 then provides the demand response information to the user. More specifically, in the example embodiment, computing device 138 receives the demand response data from monitoring device 114. In the example embodiment, communication interface 230 receives the demand response data from monitoring device 114. Communication interface 230 transmits the demand response data to processor 214 and processor 214 generates a plurality of energy prices based on the demand response data received, wherein each energy price is associated with a time range.

More specifically, in the example embodiment, processor 214 generates the plurality of energy prices by calculating a plurality of recharging costs based on the demand response data. For example, processor 214 may calculate the plurality of recharging costs based on the number of electric vehicles 108 that have been coupled to charging station 100 during a period of time and/or a consumption of electrical energy by the electric vehicles 108 during the period of time. Processor 214 may also calculate the plurality of recharging costs based on a consumption of electrical energy by any users of charging station 100 during a period of time.

Computing device 138 then presents the plurality of energy prices to the user via presentation interface 207. More specifically, the plurality of energy prices are presented to the user via display device 210. The user is then enabled to identify when to use charging station 100. More specifically, based on the pricing information received, the user can identify the optimal period of time to charge electric vehicle 108 at charging station 100 in order to receive the cheapest price rates.

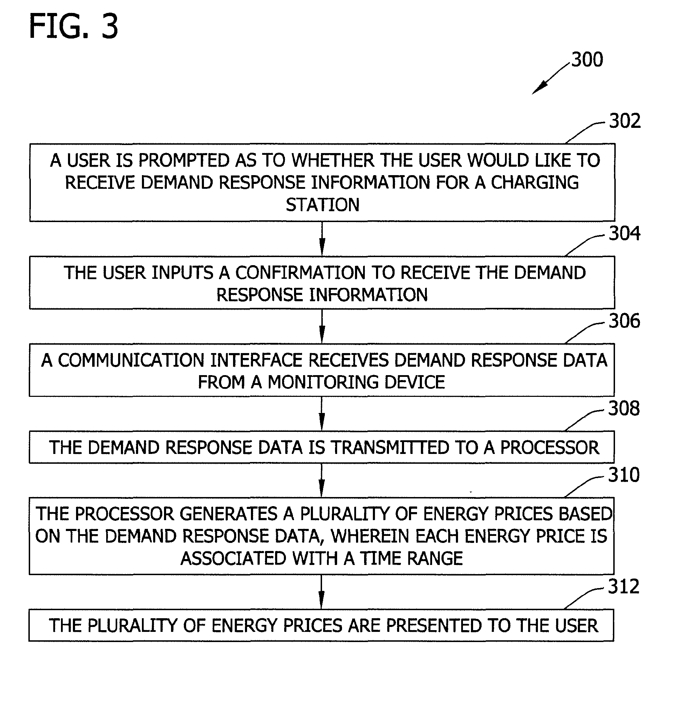

Fig. 3 illustrates a method 300 for generating energy prices by an electric vehicle charging station 100 (shown in Fig. 1) by using a computing device, such as computing device 138 (shown in Figs. 1 and 2). Computing device 138, via a presentation interface 207 (shown in Fig. 2), prompts 302 the user as to whether the user would like to receive demand response information for charging station 100. The user inputs 304, via a user interface 204 (shown in Fig. 2), a confirmation to receive the demand response information.

In the example embodiment, a communication interface 230 (shown in Fig. 1) receives 306 demand response data for charging station 100 from a monitoring device 114 (shown in Fig. 1) and the data is transmitted 308 to a processor 214 (shown in Fig. 2). Processor 214 generates 310 a plurality of energy prices based on the demand response data, wherein each energy price is associated with a time range. The plurality of energy prices are then presented 312 to the user via presentation interface 207.

As compared to known charging stations, the above-described embodiments enable a charging station to generate energy prices based on demand response data for the charging station. More specifically, the embodiments described herein include a computing device for use with an electric vehicle charging station. The computing device includes an interface that is configured to receive demand response data for the charging station. Moreover, the computing device includes a processor that is coupled to the interface and that is programmed to generate a plurality of energy prices based on the demand response data, wherein each energy price is associated with a time range. The computing device also includes a presentation interface that is coupled to the processor for use in presenting the plurality of energy prices to the user of the charging station. Accordingly, the computing device enables the charging station to generate energy prices that are based on the demand response data that is unique to the charging station. As such, the charging station may determine prices that may be used by a utility to manage the consumption patterns and/or the behavior of energy consumption by their customers in response to supply conditions. Moreover, by providing such energy prices to the user, the user is enabled to identify the optimal period of time to charge his or her electric vehicle at the charging station in order to receive the cheapest price rates.

Technical features of the apparatus, systems, and methods described herein includes at least one of: (a) receiving demand response data for a charging station; (b) generating a plurality of energy prices based on demand response data, wherein each energy price is associated with a time range; and (c) presenting a plurality of energy prices to a user of a charging station.

Example embodiments of systems, apparatus, and methods for use in generating energy prices are described above in detail. The systems, apparatus, and methods are not limited to the specific embodiments described herein, but rather, components of each system and/or steps of each method may be utilized independently and separately from other components and/or steps described herein. For example, each system may also be used in combination with other systems and methods, and is not limited to practice with only systems as described herein. Rather, the example embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A computing device (138) for use with a charging station (100), said computing device comprising:
an interface (230) configured to receive demand response data for the charging station;
a processor (214) coupled to said interface and programmed to generate a plurality of energy prices based on the demand response data, wherein each energy price is associated with a time range; and
a presentation interface (207) coupled to said processor for use in presenting the plurality of energy prices to a user of the charging station.

2. A computing device (138) in accordance with Claim 1, wherein said processor (214) is programmed to generate the plurality of energy prices by calculating a plurality of recharging costs based on the demand response data.

3. A computing device (138) in accordance with Claim 1 or Claim 2, wherein the demand response data includes at least one of a number of electric vehicles (108) coupled to the charging station (100) during a period of time and a consumption of electrical energy by the electric vehicles during the period of time.

4. A computing device (138) in accordance with Claim 3, wherein the period of time includes at least one of a period of minutes, a period of hours, a period of days, and a period of months.

5. A computing device (138) in accordance with any one of Claims 1 to 4, wherein said processor (214) is programmed to generate the plurality of energy prices by calculating a plurality of recharging costs based on a consumption of electrical energy by users of the charging station (100) during a period of time.

6. A computing device (138) in accordance with any one of Claims 1 to 5, wherein the demand response data includes at least one of a number of electric vehicles (108) coupled to the charging station (100) during a season and a consumption of electrical energy by the electric vehicles during a season.

7. A computing device (138) in accordance with any one of Claims 1 to 6, wherein said presentation interface (207) comprises at least one display device (210).

8. A charging station (100) comprising:
at least one monitoring device (114) configured to generate demand response data;
a computing device (138) coupled to said at least one monitoring device, said computing device comprising:
an interface (230) configured to receive the demand response data;
a processor (214) coupled to said interface and programmed to generate a plurality of energy prices based on the demand response data, wherein each energy price is associated with a time range; and
a presentation interface (207) coupled to said processor for use in presenting the plurality of energy prices to a user of said charging station.

9. A charging station (100) in accordance with Claim 8, wherein said at least one monitoring device (114) includes an electricity meter.

10. A charging station (100) in accordance with Claim 8 or Claim 9, wherein said processor (214) is programmed to generate the plurality of energy prices by calculating a plurality of recharging costs based on the demand response data.

11. A charging station in accordance with Claim 8, 9 or 10, wherein the demand response data includes at least one of a number of electric vehicles (108) coupled to said charging station (100) during a period of time and a consumption of electrical energy by the electric vehicles during the period of time.

12. A charging station in accordance with Claim 11, wherein the period of time includes at least one of a period of minutes, a period of hours, a period of days, and a period of months.

13. A charging station in accordance with Claim 11 or Claim 12, wherein said processor (214) is programmed to generate the plurality of energy prices by calculating a plurality of recharging costs based on a consumption of electrical energy by users of said charging station (100) during a period of time.

14. A charging station in accordance with any one of Claims 8 to 13, wherein the demand response data includes at least one of a number of electric vehicles (108) coupled to said charging station (100) during a season and a consumption of electrical energy by the electric vehicles during a season.

15. A method for providing demand response information, said method comprising:
receiving demand response data for a charging station (100);
generating a plurality of energy prices based on the demand response data, wherein each energy price is associated with a time range; and
presenting the plurality of energy prices to a user of the charging station (100).
